# EUROPEAN PATENT APPLICATION

(11) **EP 3 130 918 A2**
(43) Date of publication of application: **15.02.2017**
(21) Application number: 15200592.2
(22) Date of filing: 16.12.2015
(51) Int. Cl.: G01N 29/22

(54) **APPARATUS FOR FIXING OF MEASURING DEVICE FOR MONITORING BOTTOM SHAPE NEAR BRIDGE SUPPORT TO BRIDGE STRUCTURE, METHOD FOR FIXING SUCH APPARATUS TO BRIDGE STRUCTURE AND SLING FOR SUCH FIXING**

(30) Priority: 10.08.2015 PL 41449615
(71) Applicant: Instytut Badawczy Dróg I Mostów, 03-302 Warszawa (PL); Escort Sp. z o.o., 70-103 Szczecin (PL)
(72) Inventor: CIESLA, Juliusz, 02-106 Warszawa (PL); TOPCZEWSKI, Lukasz, 03-984 Warszawa (PL); MIKOLAJEWSKI, Pawel, 71-471 Szczecin (PL); ADAMSKI, Pawel, 59-300 Lubin (PL); LUBEK, Slawomir, 71-220 Bezrzecze (PL); MARKOWSKI, Zenon, 70-744 Szczecin (PL); MOTYLINSKI, Marcin, 71-677 Szczecin (PL); MALECKI, Mariusz, 80-175 Gdansk (PL)
(74) Representative: Adamczyk, Piotr

(57) **Abstract**

The apparatus contains a boom (4), at the end of which there is a measuring device (5). The boom (4) is affixed to a multi-section clamp (3) with adjustable length, which is mounted on a sling (1) affixed to a bridge support (2). The boom (4) consists of a guide (18) mounted slidably and rotatably in a sleeve (19), with the option to stabilize a specific position of this guide (18) with respect to the sleeve (19). One guide (18) end is connected to the cover (6) of the measuring device (5). The sleeve (19) of the boom (4) is affixed to the lower part (10) of the clamp (3).

## Description

The object of the invention is apparatus for fixing to a bridge structure a measuring device which monitors bottom shape near the bridge support, in particular a sonar, method for fixing such monitoring device to the bridge structure and sling for fixing the apparatus to the bridge structure.

Sonar surveys of surroundings of bridge supports are used to assess the technical condition of water engineering structures. The main inconvenience occurring when studying the current bottom shape around components of engineering structures submerged in water, e.g. bridge supports, is the difficult access to locations where the sonar measuring head should be placed. It is a result of significant heights of bridge supports, strong currents near the supports, large mass of the measuring device, and uncontrolled movements of the floating vessel on which such device is mounted. Frequently, measurements of the bottom geometry are performed using floating vessels, e.g. boats, on which appropriate measuring device are mounted. Another approach uses a vehicle with a boom parked on the bridge carriageway. In such case, measuring devices are mounted on the aforementioned boom and lowered below the water level.
The method of measurement of rivers and bodies of water using floating vessels was disclosed in the published Polish patent application No. P.358347. The measurement is conducted from the floating vessel that carries an echo-sounder submerged in water, a GPS satellite receiver, and a recorder. This recorder records measurement data from the echo-sounder, and geographic and time coordinates from the GPS satellite receiver.
When measuring bottom shape from a boat, it is particularly important to stabilize its location in relation to the bridge support during measurements. Water rippling and a strong current may even lead to skipping certain measuring points, which translates to aliased results.
Stable mounting of a portable measuring device in a designated location has a primary effect on the efficiency of monitoring bottom condition around bridge supports, and on the assessment of bridge structure safety. With limited capacity to perform measurements in designated locations, there is a risk that locations where bottom degradation occurs, in the form that threatens the support the most, will remain uncontrollable.
Nowadays, in developed countries, measurements of bottom degradation are conducted from the bridge carriageway level, mainly using cranes mounted on a truck carrier. A truck-mounted crane has an articulated boom, the tip of which carries a watercourse bottom depth measuring device. This measurement method is also suitable for use in flood flow conditions. The reach of the boom limits the possibilities when using a truck-mounted crane to perform such measurements. Performing measurements using a typical truck-mounted crane is suitable for use from platforms situated between 5 and 15 meters above the water level. In order to perform measurements from the bridge carriageway, which is situated higher, a crane with articulated boom must be used.
KR100832924 describes a method for performing measurements of bottom degradation using a probe submerged in water and lowered onto the bottom of the body of water. The probe is lowered using a boom mounted on the bridge. The boom, with the probe sliding inside, is cylindrical and equipped with a gauge with a scale, indicating the position of the probe at the time of measurement.

The goal of the invention was to solve a problem of efficient and cheap placing in designated locations a measuring device, e.g. a sonar, used for monitoring bottom shape around bridge supports.
Such goal is fulfilled by an apparatus according to the invention. It comprises a multi-section clamp with adjustable length, to be mounted on a sling affixed to the bridge support, To the clamp the boom of the measuring device is fixed. The boom consists of a guide embedded in a sleeve, slidably and rotably, allowing the stabilization of individual position of the guide with respect to the sleeve. One end of the guide is connected to a cover of the measuring device, while the sleeve of the boom is affixed to the lower part of the clamp.
In one of variants of the apparatus according to the invention the clamp consists of an upper section, a middle section and a lower section. The sections take a form of the letter "Z" after combining. The upper section ends with a hanger and is slidably connected to the middle section that has a form of an angle bracket. The lower section has a form of a flat bar with hooks for mounting the sleeve of the boom.
In next variant of the apparatus according to the invention the boom sleeve is equipped with means for releasable connecting it to the guide and for stabilizing the position of the guide with respect to the sleeve, preferably by the way of distance and press bolts and locking rings. The boom sleeve is also equipped with means for mounting the sleeve on the hooks of the lower section of the clamp.
In next variant of the apparatus according to the invention the cover of the measuring device is connected to the guide of the boom through a shield connector. The connector is equipped with a sleeve socket, placed centrally on a first surface of the connector, and adjusted to the end of the guide protruding out of the sleeve. The cover of the measuring device is releasable mounted on the second surface of the shield connector, located opposite its first surface.
In another variant of the apparatus according to the invention it is equipped with first and second props used to stabilize its position with respect to the bridge support. The first props stabilizing the boom are placed in sockets mounted on the shield connector. The second props stabilizing the clamp are placed in sleeve sockets mounted on the lower section of the clamp.
In yet another variant of the apparatus according to the invention axes of the first props form a right angle, axes of the second props also form a right angle, and axes of adjacent first and second props are aligned parallel to each other.
The method according to the invention involves affixing a sling with hooks to a bridge structure above the water level. On the hooks a clamp with a boom of the measuring device is mounted. The clamp is comprised of an upper section, with a hanger end for fixing on the hook of the sling, of a middle section and of a lower section. All the sections of the clamp are connected by releasable means enabling the determination of relative position of individual sections. The boom is mounted using releasable means on the lower section of the clamp. This boom is comprised of the guide embedded in the sleeve. The position of the guide is stabilized with respect to this sleeve using releasable means. The cover of the measuring device is releasable mounted to one end of the guide, preferably using a shield connector.
In one of variants of the method according to the invention the sections of the clamp are connected to each other by placing the lower end of the upper section into a first arm of the two-arm middle section. The relative position of both these sections is stabilized using known technical means. On the second arm of the middle section the lower section is mounted. The sleeve of the boom is releasable mounted on the lower section. In the sleeve the boom guide is embedded, with the cover of the measuring device mounted releasable thereto. Next the hanger of the upper section of the clamp is placed on the hook of the sling mounted to the bridge support above the water level.
In another variant of the method according to the invention the position of the boom with respect to the bridge support is stabilized using first props. Placement of the clamp with respect to the bridge support is stabilized using second props The first props are placed in sockets of the shield connector, and the second props are placed in sleeve sockets of the clamp.
A sling according to the invention has a form of a horizontal support, mounted on the bridge support above the water level and equipped with hooks for mounting the load-bearing structure of the measuring device.
In one of variants of the sling according to the invention the horizontal support has a form of a multi-section band, made up of flat segments with hinged connections and fastened with the belt, looping around the bridge support. Each flat segment is equipped with the hook for mounting the load-bearing structure of the measuring device.
In another variant of the sling according to the invention the horizontal support has a form of a rail permanently fixed to the bridge support, whereas the hook is releasable connected to the rail.

Results of measurements (echograms) of bottom shape near bridge supports conducted using the invention are characterized by a very high accuracy. The apparatus according to the invention is easy to transport, because it is comprised of longitudinal, light and small segments. These segments can be combined on site, near a designated bridge support. All segments are capable to adjust their relative position, and therefore the placement of the measuring device can be adjusted to the current level of water in the body, and to the depth near the support. Using a sling, in the form of a band affixed around a bridge support, enables the attachment of the clamp to the measuring device and sliding it in the horizontal plane along the surface of the support wall. The clamp enables lowering of a measuring device (e.g. a sonar) along the surface of the support wall, and rotating this device around the vertical axis. The purpose of changing the position of the clamp is to change the position of the measuring device head, in case of a sonar - to change the position of its transducer, which enables performing multi-spot scans of the bottom surface around the support wall in parallel and perpendicular directions.
The sling, in the form of a rail, allows conducting measurements at a fixed location. Placing the rail on a bridge support may be indicated even by the bridge designer, then the rail mounting elements will be embedded in a support, which will facilitate future assembly of the sling. In case of supports with frequent, regular washouts, such rails can be permanently installed, which will enable easy and quick suspension of the clamp with a measuring device from a floating vessel and conducting inspection measurements. Fixing points for a sling rail can be contemplated in advance for existing bridge supports, and the shape and size of such rail can be designed depending on the shape and size of supports. Rail mounting elevation should take into account the safety of using such rail on rivers with shipping traffic.

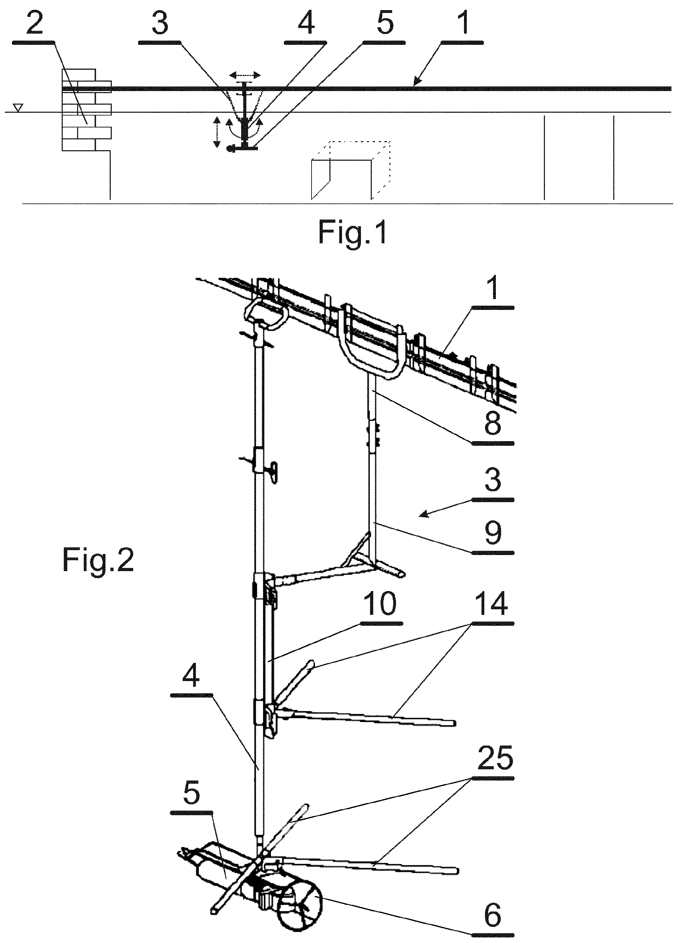

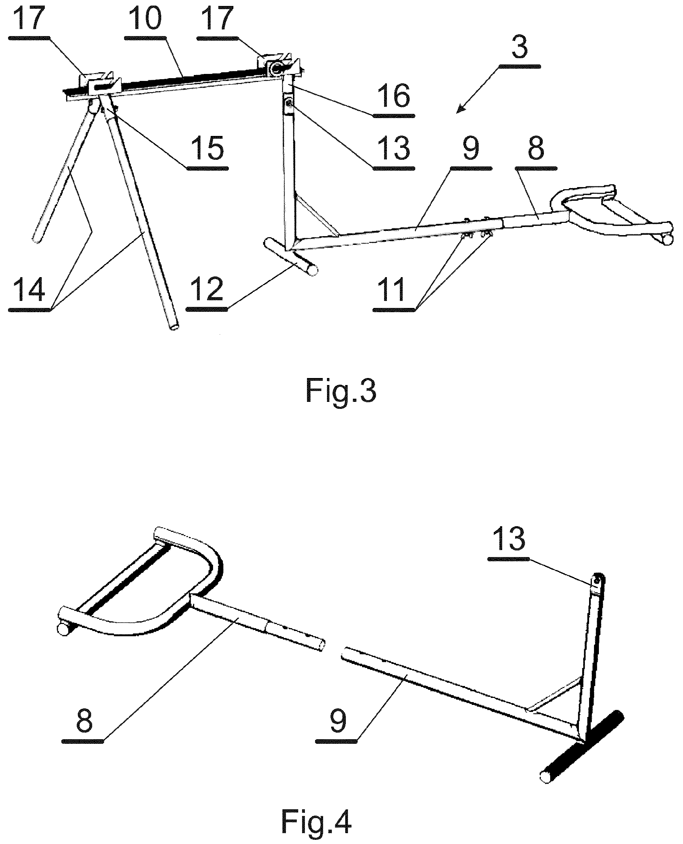

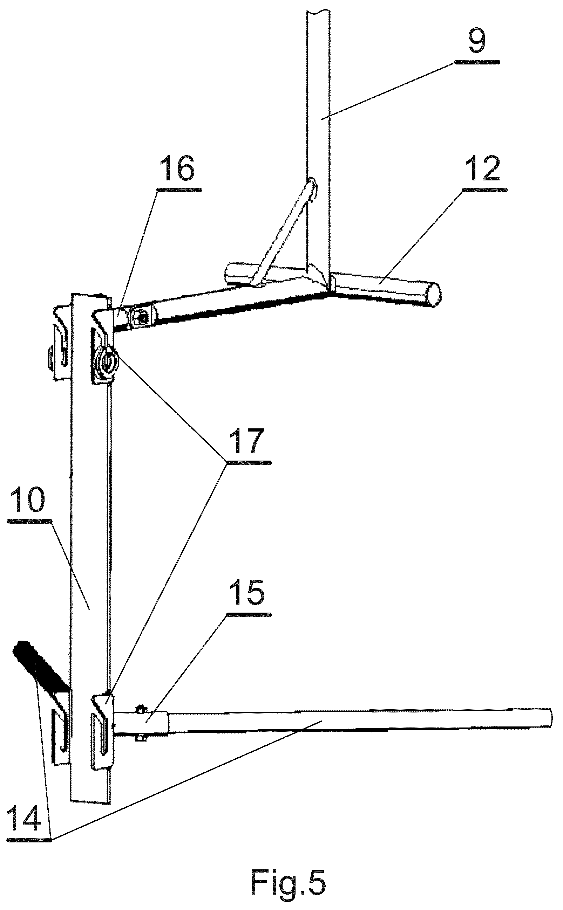

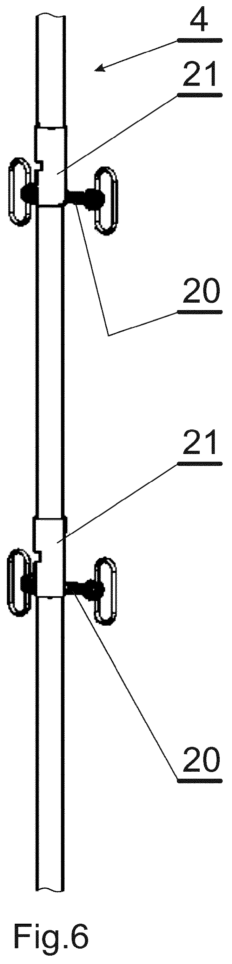

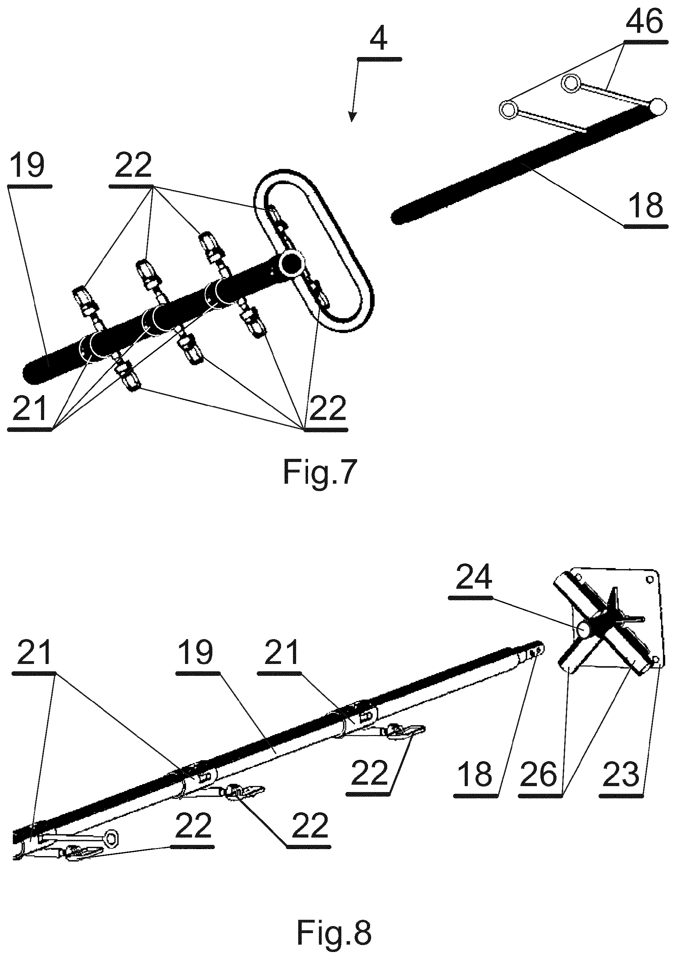

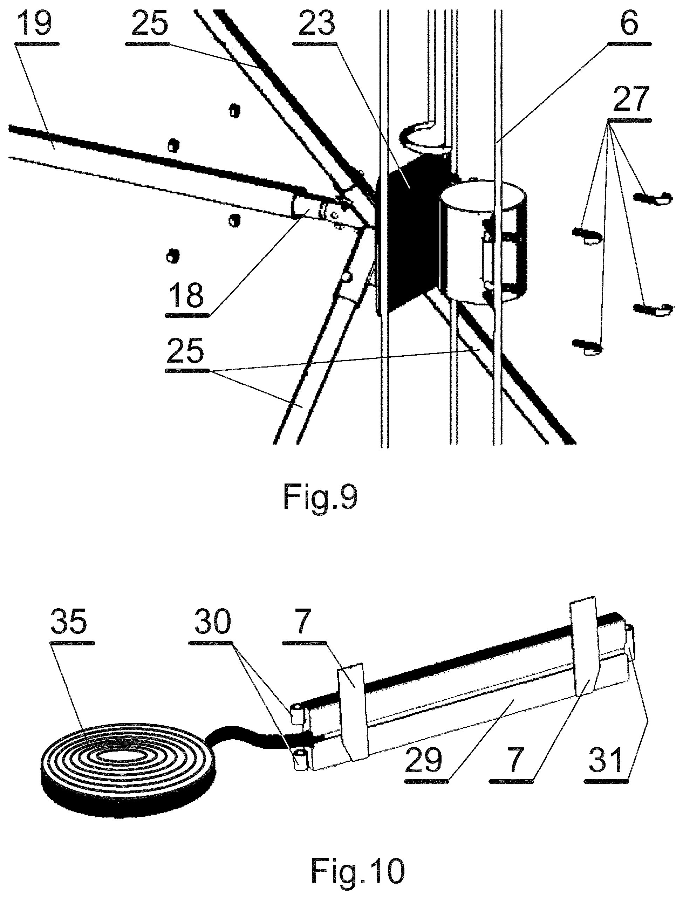

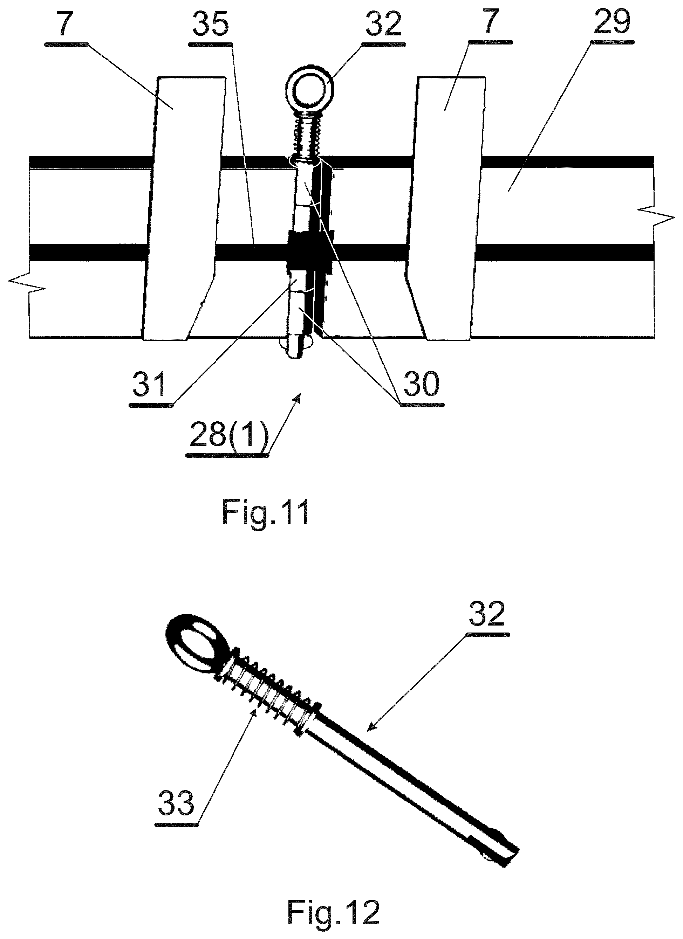

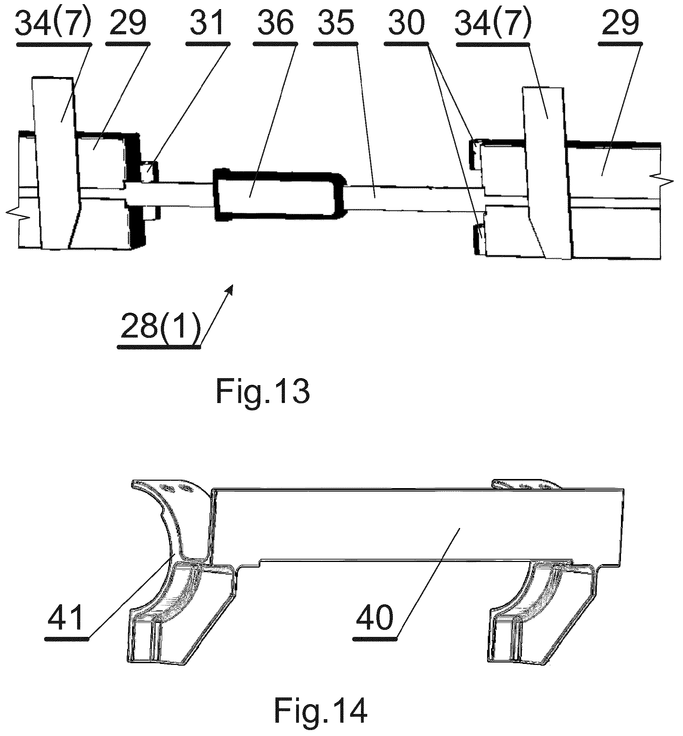

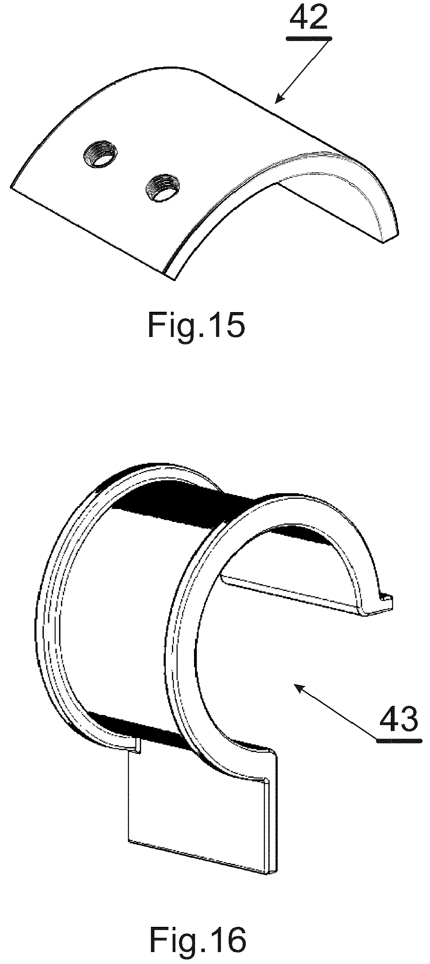

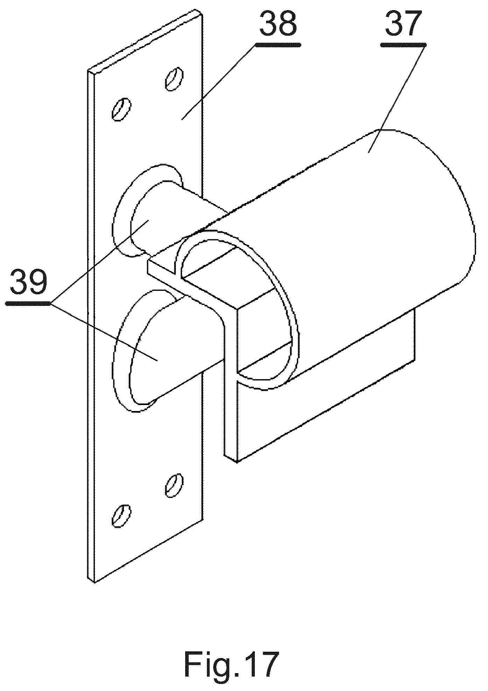

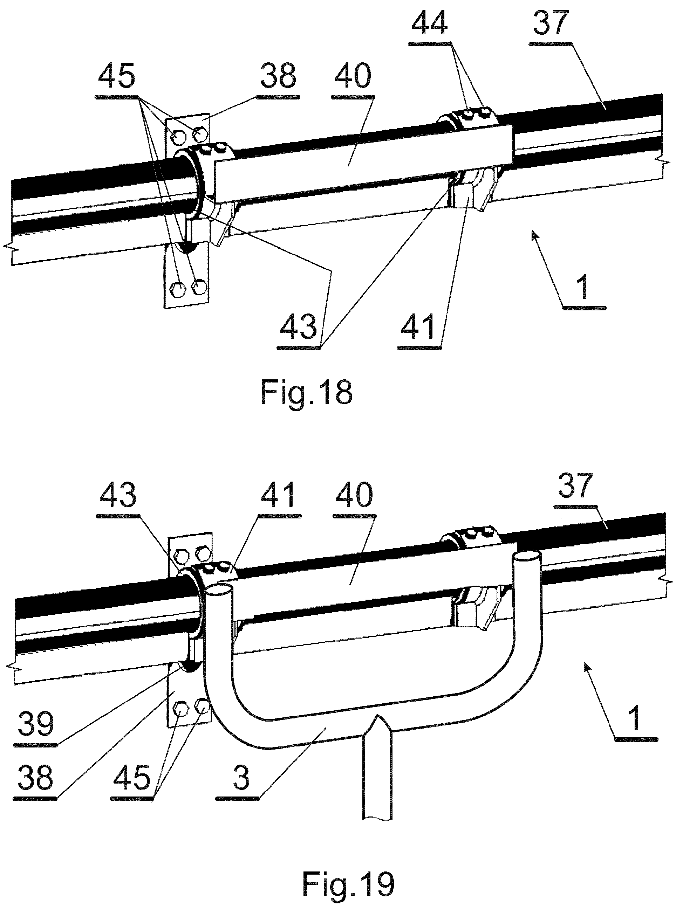

The exemplary embodiment of the invention is presented on the drawing, where Fig. 1 schematically shows the apparatus according to the invention mounted on a bridge support. Fig. 2 shows the exemplary apparatus mounted on the sling. Fig.3 shows the clamp of the apparatus from Fig. 1, while Fig. 4 shows the upper section and the angular middle section of this clamp. Fig. 5 shows the angular middle section of the clamp from Fig. 3 connected to the lower section of this clamp. Fig. 6 shows the measuring device boom sleeve, whereas Fig. 7 shows the sleeve and guide of this boom. Fig. 8 shows the boom and shield connector of the boom guide. Fig. 9 shows the boom with a mounted shield connector, props, and the measuring device cover. Fig. 10 shows the flat segment of the continuous sling, Fig. 11 shows the hinged connection of such flat segments, while Fig. 12 shows the pin connecting flat segments of the continuous sling. Fig. 13 shows flat segments of the continuous sling with a belt and a belt tensioning lock. Fig. 14 shows a flat element of the hook with the lower part of the clamp for the sectional sling. Fig. 15 shows the upper part of the hook clamp for the sectional sling, while Fig. 16 shows the flexible wearing washer for the hook clamp. Fig. 17 shows the cross section of the sectional sling rail. Fig. 18 shows the sectional sling in the form of a fixed rail with a hook for hanging the measuring device clamp, and Fig. 19 shows the same sectional sling with a measuring device clamp mounted thereon.

The exemplary apparatus for fixing a measuring device comprises of a boom 4, measuring device 5, clamp 3 in the shape of the letter "Z", and of sling 1, fixed to a bridge support 2. The boom 4 consists of a rod guide 18 and sleeve 19, in which the guide 18 is slidably and rotatably embedded. The lower end of the guide 18 is placed and separably mounted using bolts in the sleeve socket 24 of the shield connector 23. On the first surface of the shield connector 23, there is a central sleeve socket 24, in which sockets 26 for mounting props 25 stabilizing the boom 4 position with respect to the bridge support 2 are also mounted. The cover 6 of the measuring device 5 (in this case, a sonar) is mounted on the second surface of the shield connector 23, which is positioned opposite its first surface. The cover 6 is mounted to the shield connector 23 using hook bolts 27. The clamp 3 for connecting the boom 4 with the measuring device 5, and for positioning the measuring device 5 in a selected location near the bridge support 2, is shaped like the letter "Z" and comprises of three sections. The upper section 8 has the form of a hanger with a bar used to mount it on hooks 7 of the sling 1. The middle section 9 is an angular section. First arm of the section 9 is used to connect to the upper section 8, and is equipped with holes used to fasten clamping bolts 11, stabilizing the position of the upper section 8 in the hole of the first arm of the section 9. Second arm of the section 9 has a clamp 13 for connecting to the lower section 10. The lower section 10 has the form of a flat bar reinforced on one side with a longitudinal rib. Two pairs of hooks 17 are affixed to the flat bar of the lower section 10. Hooks 17 are used to hold stabilizers 20 located in clamping rings 21 of the boom (4) sleeve 19. Two sleeve sockets 15, used to hold props 14, are affixed to the lower section 10, near its bottom. The support 16 used to connect the section 10 to the clamp 13 of the middle section 9 is affixed to the aforementioned reinforced surface of the section 10, near its top. The bar 12, used to balance the clamp 3 against the bridge support 2, is affixed to the corner of the middle section.
In the measurement-ready position, i.e. upon mounting the clamp 3 on the sling 1 of the bridge support 2, the upper section 8 and the lower section 10 of the clamp 3, and the boom 4, are in the vertical position, while the lower end of the boom 4 with the measuring device 5 is located below the water level. The sling 1, on which the clamp 3 is mounted, affixed to the bridge support 2, can have a form of a rail 37 illustrated on figures form 14 to 19, or a band 28, illustrated on figures from 10 to 13. The sling 1, in the form of a rail 37, is mounted to the bridge support 2 using anchors 45. The rail 37 has the shape of a pipe reinforced using an angle bracket, and it is situated in the vertical position, above the water level. The hook 40, shown on Fig. 18, is releasable mounted on the rail 37. This hook is placed on the sectional sling 37, in the form of a rail, and it is made up of the flat element 40, which connects to the upper section 8 of the clamp 3, lower part of the clamp 41, upper part of the clamp 42, bolts 44 connecting the lower and the upper parts of the clamp (41, 42), as well as the flexible wearing washer 43. The washer 43 allows non-wearing sliding of the hook 40 along the rail 37. The internal diameter of the washer 43 is adjusted to the diameter of the clamp. The diameter of the clamp is adjusted to the diameter of the rail 37 in order for the hook, upon mounting on the rail 37, to safely rotate around the rail 37 axis. The purpose of rotation with a safe, small range is to facilitate mounting of the apparatus, and to secure it when raised by waves.
The sling 1 in a form of a band 28 is comprised of flat cuboid segments 29 connected with a flexible belt 35. Ends of the belt 35 protrude out of the assembled and frontally joined segments 29, and they are connected with a tensioning lock 36. The band 28 is situated horizontally and surrounds the bridge support 2. Each flat segment 29 of the band 28 is equipped with two flat hooks 34 for hanging the upper section 8 of the clamp 3. Flat segments 29 of the band 28 are connected to each other using a hinge formed by a pair of short sleeves 30, affixed to the first end of each flat segment 29, and a pair of long sleeves 31, affixed to the second end of each flat segment 29. Both elements (30, 31) of each such hinge are connected using a pin 32 with a lock end and a press wire spring 33.
The method of mounting the apparatus of the invention consists in the assembly and connecting of the clamp 3 and the boom 4. Assembling the clamp 3 consists in the connection of all its sections 8, 9 and 10, and the stabilization of the position of the upper section 8 with respect to the middle section 9, by embedding the upper section 8 in the pipe of the middle section 9 at a length determined by local conditions near the support 2 and the water level under the bridge. Assembling the boom 4 consists in the placement of the guide 18 in the sleeve 19, and the stabilization of its position with respect to this sleeve, by setting stabilizing rods 46 in locking rings 21. The guide 18 is connected to the shield connector 23, on which the cover 6 of the measuring device 5 is mounted. Then, the boom 4 is mounted on hooks 17 of the lower section of the connector 10 of the clamp 3, and the upper section 8 of the clamp 3 is hanged on the hook 7 of the sling 1, previously mounted to the bridge support 2. The placement of locking rings 21 on the sleeve 19 of the boom 4 is determined using stabilizers in the form of distance-and -press bolts 22. As mentioned above, locking rings 21 are used to stabilize the position of the guide 18 in the sleeve 19 using locking rods 46 and to adjust the length of the boom 4 to the required depth of the measuring device 5. Stabilizers 20 are used to mount the sleeve 19 of the boom 4 on hooks 17 of the lower section 10. Respectively, props 25 of the boom 4 and props 14 of the clamp 3 are placed in sockets 26 of the shield connector 23, and in sockets 15 of the clamp 3. Props 14 and 25 have the form of rods situated perpendicular to vertical components of the apparatus, i.e. the clamp 3 and the boom 4. Props 14 and 15 lean against the wall of the bridge support 2 in order to stabilize the position of the measuring device 5 with respect to this support, upon the installation of the clamp 3 with the boom 4 on the sling 1. The clamp 3 with the boom 4 mounted thereon is hanged on hooks 34 of the sling 1, in the form of a band 28, or on the hook 40 of
the sling 1, in the form of a rail 37, affixed with anchors 45 to the wall of the bridge support 2. The flat bar 38 and spacer supports 39 have been used to mount the rail 37. The sectional structure of the apparatus of the invention, visible on the drawing, ensures its easy assembly and disassembly, as well as changing the length and stabilizing the relative position of individual sections with respect to each other. The guide 18 embedded in the sleeve 19 can rotate, transmitting power to the cover 6 of the measuring device 5, rigidly mounted on the guide 18. Because of this, this device can be rotated by 90°, and it is possible to place the measuring device perpendicular or parallel to the wall of the bridge support 2.

## Claims

1. An apparatus for fixing of a measuring device (5), monitoring bottom shape near a bridge support (2), to a bridge structure (2), containing a boom (4), on the end of which there is the measuring device (5), **characterized in that** it comprises a multi-section clamp (3) with adjustable length, to be mounted on a sling (1) affixed to the bridge support (2), to the clamp (3) the boom (4) of the measuring device (5) is fixed, wherein the boom (4) consists of a guide (18) embedded in a sleeve (19), slidably and rotably, allowing the stabilization of individual position of the guide (18) with respect to the sleeve (19), one end of the guide (18) is connected to a cover (6) of the measuring device (5), while the sleeve (19) of the boom (4) is affixed to the lower part (10) of the clamp (3).

2. The apparatus according to Claim 1, **characterized in that** the clamp (3) consists of an upper section (8), a middle section (9) and a lower section (10), which take a form of the letter "Z" after combining, wherein the upper section (8) ends with a hanger and is slidably connected to the middle section (9) that has a form of an angle bracket, while the lower section (10) has a form of a flat bar with hooks (17) for mounting the sleeve (19) of the boom (4).

3. The apparatus according to Claim 1 or 2, **characterized in that** the boom (4) sleeve (19) is equipped with means (21, 22) for releasable connecting it to the guide (18) and for stabilizing the position of the guide (18) with respect to the sleeve (19), preferably by the way of distance-and-press bolts (22) and locking rings (21), and with means for mounting the sleeve (19) on the hooks (17) of the lower section (10) of the clamp (3).

4. The apparatus according to Claim 1 or 2 or 3, **characterized in that** the cover (6) of the measuring device (5) is connected to the guide (18) of the boom (4) through a shield connector (23), equipped with a sleeve socket (24), placed centrally on a first surface of the shield connector (23), and adjusted to the end of the guide (18) protruding out of the sleeve (19), while the cover (6) of the measuring device (5) is releasable mounted on the second surface of the shield connector (23), located opposite its first surface.

5. The apparatus according to one of Claims from 1 to 4, **characterized in that** it is equipped with first (25) and second (14) props used to stabilize its position with respect to the bridge support (2), whereas the first props (25) stabilizing the boom (4) are placed in sockets (26) mounted on the shield connector (23), while the second props (14) stabilizing the clamp (3) are placed in sleeve sockets (15) mounted on the lower section (10) of the clamp (3).

6. The apparatus according to Claim 5, **characterized in that** axes of the first props (25) form a right angle, axes of the second props (14) form a right angle, and axes of adjacent first (25) and second (14) props are aligned parallel to each other.

7. A method for fixing a measuring device (5) for monitoring bottom shape near bridge supports, **characterized in that** a sling (1) with hooks (7), on which a clamp (3) with a boom (4) of the measuring device is mounted, is affixed to the bridge structure (2) above the water level, and this clamp (3) is comprised of an upper section (8), with a hanger end for fixing on the hook (7) of the sling (1), a middle section (9), and a lower section (10), all the sections (8, 9, 10) of the clamp (3) are connected by releasable means enabling the determination of relative position of individual sections (8, 9, 10), the boom (4) is mounted using releasable means on the lower section (10) of the clamp (3), and this boom (4) is comprised of the guide (18) embedded in the sleeve (19), and the position of the guide (18) is stabilized with respect to this sleeve (19) using releasable means, and the cover (6) of the measuring device (5) is releasable mounted to one end of the guide (18), preferably using a shield connector (23).

8. The method according to Claim 7, **characterized in that** the sections (8, 9, 10) of the clamp (3) are connected to each other by placing the lower end of the upper section (8) into a first arm of the two-arm middle section (9) and the relative position of both these sections (8, 9) is stabilized using known technical means, while, on the second arm of the middle section (9), the lower section is mounted (10), on which the sleeve (19) of the boom (4) is releasable mounted, in the sleeve (19) the boom (18) is embedded, with the cover (6) of the measuring device (5) mounted releasable thereto, and the hanger of the upper section (8) of the clamp (3) is placed on the hook (7) of the sling (1) mounted to the bridge support (2) above the water level.

9. The method according to Claim 7, **characterized in that** the position of the boom (4) with respect to the bridge support (2) is stabilized using first props (25), while the placement of the clamp (3) with respect to the bridge support (2) is stabilized using second props (14), wherein the first props (25) are placed in sockets (26) of the shield connector (23), and the second props (14) are placed in sleeve sockets (15) of the clamp (3).

10. A sling for fixing a measuring device (5) to a bridge structure (2), **characterized in that** it has a form of a horizontal support (28, 37), mounted on the bridge support (2) above the water level, and equipped with hooks (7, 40) for mounting the load-bearing structure (3, 4) of the measuring device (5).

11. The sling according to Claim 10, **characterized in that** the horizontal support has a form of a multi-section band, made up of flat segments (29) with hinged connections and fastened with the belt (35), looping around the bridge support (2), wherein each flat segment (29) is equipped with the hook (7) for mounting the load-bearing structure (3, 4) of the measuring device (5).

12. The sling according to Claim 10, **characterized in that** the horizontal support has a form of a rail (37) permanently fixed to the bridge support (2), whereas the hook (40) is releasable connected to the rail (37).
